(19) Europäisches Patentamt
European Patent Office
Office européen des brevets

(11) **EP 1 841 236 A2**

(12) **EUROPEAN PATENT APPLICATION**

(43) Date of publication:
**03.10.2007 Bulletin 2007/40**

(51) Int Cl.:
*H04N 7/36* (2006.01)   *H04N 7/50* (2006.01)
*H04N 7/26* (2006.01)

(21) Application number: **07003239.6**

(22) Date of filing: **15.02.2007**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **31.03.2006 JP 2006099131**

(71) Applicant: **KABUSHIKI KAISHA TOSHIBA**
**Tokyo 105-8001 (JP)**

(72) Inventor: **Kodama, Tomoya**
**c/o Intellectual Property Division,**
**Minato-ku**
**Tokyo 105-8001 (JP)**

(74) Representative: **HOFFMANN EITLE**
**Patent- und Rechtsanwälte**
**Arabellastrasse 4**
**81925 München (DE)**

(54) **Temporal in-the-loop filtering to improve the reference picture for motion compensated prediction**

(57)   An encoding apparatus includes a motion compensator (1) to motion-compensate a reference image to generate a predictive image of an input image, a subtracter (6) to generate a differential signal between the input image and the predictive image, an encoder (12) to encode the differential signal to generate encoded information, a local decoder (7, 9, 11) to local-decode the encoded information to generate a local-decoded differential image, a filter (4) to perform a filtering process of a temporal direction between the local-decoded differential image and the predictive image, an inverse motion compensator (3) to motion-compensate the image provided by the filtering process in an inverse direction with respect to motion compensation of the motion compensator to generate an inverse predictive image, and an updating unit (5) configured to update the reference image by the inverse predictive image.

FIG. 2

**Description**

The present invention relates to a video encoding apparatus for encoding a video image and a decoding apparatus for decoding an encoded image.

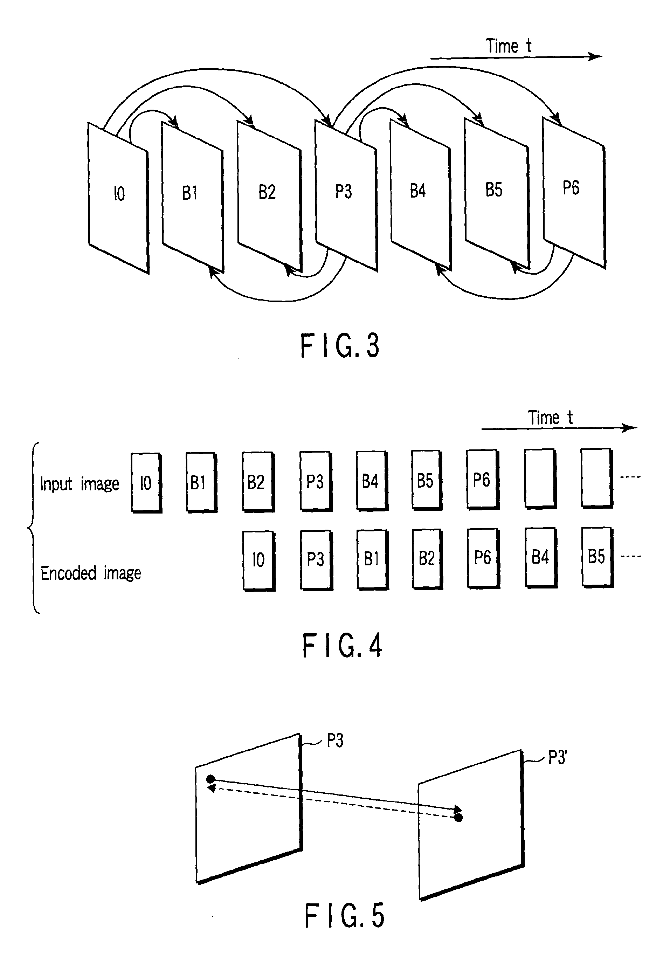

In video encoding, an interframe motion compensation using redundancy between frames is used. For example, JP-A 7-288719(KOKAI) discloses a technique to remove encoding distortion of a reference image by time-domain filtering between the reference frame and the encoded frame. The configuration is shown in FIG. 3. When, for example, the frame P3 is encoded, the frame P3 is filtered with a time directional lowpass filter with motion compensation, using a picture I0 used as a reference frame for the frame P3 to reduce encoding distortion, before the frame P3 is stored in a frame memory as a reference image. If the reference frame wherein distortion is reduced is used for encoding each of frames B1, B2, P6, B4 and B5 in this way, the encoding efficiency is improved.

However, this encoding distortion removal system is only a 2-tap average filter when viewing as a filter. The encoding distortion is reduced only to half at a maximum by the system. Whereas the international standard MPEG-4 AVC/H.264 provides a 5-tap spatial filter to remove block noise, the above system is poor in comparison with the system of MPEG-4AVC/H.264.

An aspect of the present invention provides an encoding apparatus comprising: a motion compensator to motion-compensate a reference image to generate a predictive image of an input image; a subtracter to generate a differential signal between the input image and the predictive image; an encoder to encode the differential signal to generate encoded information; a local decoder to local-decode the encoded information to generate a local-decoded differential image; a filter to perform a filtering process of a temporal direction between the local-decoded differential image and the predictive image; an inverse motion compensator to motion-compensate the image provided by the filtering process in an inverse direction with respect to motion compensation of the motion compensator to generate an inverse predictive image; and an updating unit configured to update the reference image by the inverse predictive image.

The invention can be more fully understood from the following detailed description when taken in conjunction with the accompanying drawings, in which:

FIG. 1 shows a block diagram of an encoding apparatus according to a first embodiment.
FIG. 2 is a flow chart for explaining an operation of the encoding apparatus of FIG. 1.
FIG. 3 is a diagram of a prediction structure in video encoding.
FIG. 4 shows a timing chart when encoding a prediction structure shown in FIG. 3.
FIG. 5 is a diagram for explaining inverse motion compensation.
FIG. 6 is a diagram showing a change of a reference frame according to a sequence of encoding.
FIG. 7 is a block diagram of a decoding apparatus corresponding to the encoding apparatus of FIG. 1.
FIG. 8 is a flow chart for explaining operation of the decoding apparatus of FIG. 7.
FIG. 9 is a block diagram of an encoding apparatus according to the second embodiment.
FIG. 10 is a block diagram of a decoding apparatus corresponding to the encoding apparatus of FIG. 9.
FIG. 11 is a block diagram of a decoding apparatus according to the third embodiment.

There will now be described an image encoding apparatus related to an embodiment referring to an attached drawing in detail.

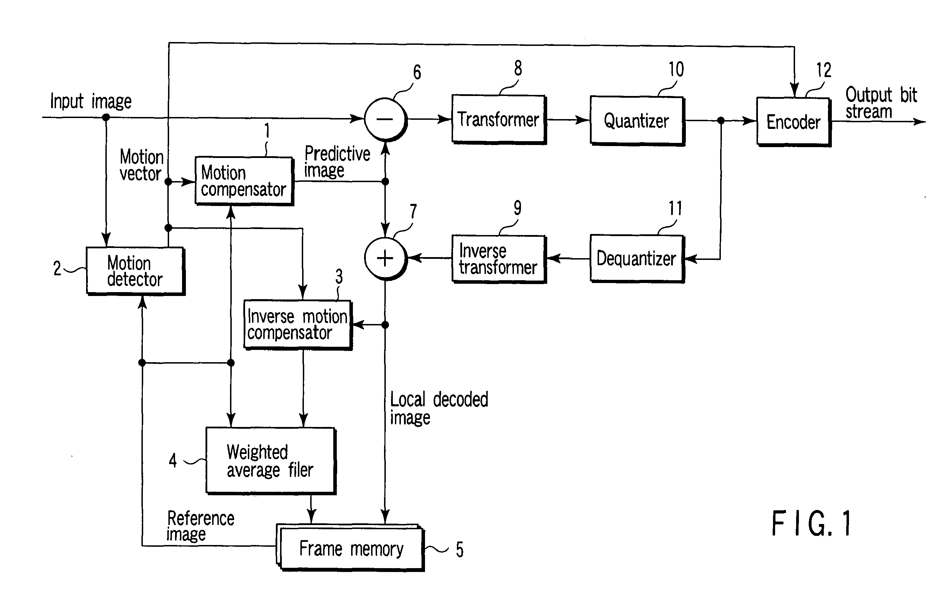

A video encoding apparatus shown in FIG. 1 comprises a motion compensator 1, a motion estimator 2, an inverse motion compensator 3, a weighted average filter 4, a frame memory 5, a subtracter 6, an adder 7, a converter 8, an inverse transformer 9, a quantizer 10, an inverse quantizer 11 and an entropy encoder 12.

The motion compensator 1 is connected to the motion detector 2 and frame memory 5, and configured to generate a predictive image from a motion vector of the motion detector 2 and a reference image of the frame memory 5. The motion detector 2 is configured to receive an input image (an original image) and the reference image of the frame memory 5 and detect a motion vector from these images.

The inverse motion compensator 3 is connected to the motion detector 2 and the frame memory 5, and performs motion compensation by an inverse motion vector with respect to a motion vector of the motion detector 2 using the motion vector of the motion detector 2 and a local decoded image input to the frame memory 5 from the adder 7 to generate a predictive signal. In other words, if the motion compensator 1 performs motion compensative prediction to a P picture from an I picture, and the inverse motion compensator 3 performs the motion compensative prediction to the I picture from the P picture to generate an inverse predictive signal.

The weighted average filter 4 is connected to the inverse motion compensator 3 and the frame memory 5, and performs weighted average filtering on the inverse predictive signal of the inverse motion compensator 3 and a reference image of the frame memory 5.

The subtracter 6 calculates a difference between an input image and the predictive image of the motion compensator 1 to generate an error signal. The transformer 8 is configured to transform the error signals into transform coefficients and comprises, for example, a discrete cosine transform. The output of the transformer 8 is connected to the quantizer 10. The quantizer 10 is configured to quantize the transform coefficients and the output of the quantizer 10 is connected to the dequantizer 11 and the entropy encoder 12.

The dequantizer 11 dequantizes the quantized transform coefficients to reconstruct the quantized transform coefficients. The output of the dequantizer 11 is connected to the inverse transformer 9. The inverse transformer 9 inverse-transforms the transform coefficients to reproduce an original error signal with quantization error and output it to the adder 7. The adder 7 adds a predictive image of the motion compensator 1 and an error signal to produce a local decoded image and stores it into the frame memory 5.

The entropy encoder 12 encodes the quantized transform coefficients of the quantizer 10 and the motion vector of the motion detector 2 in units of a symbol to produce an output bit stream.

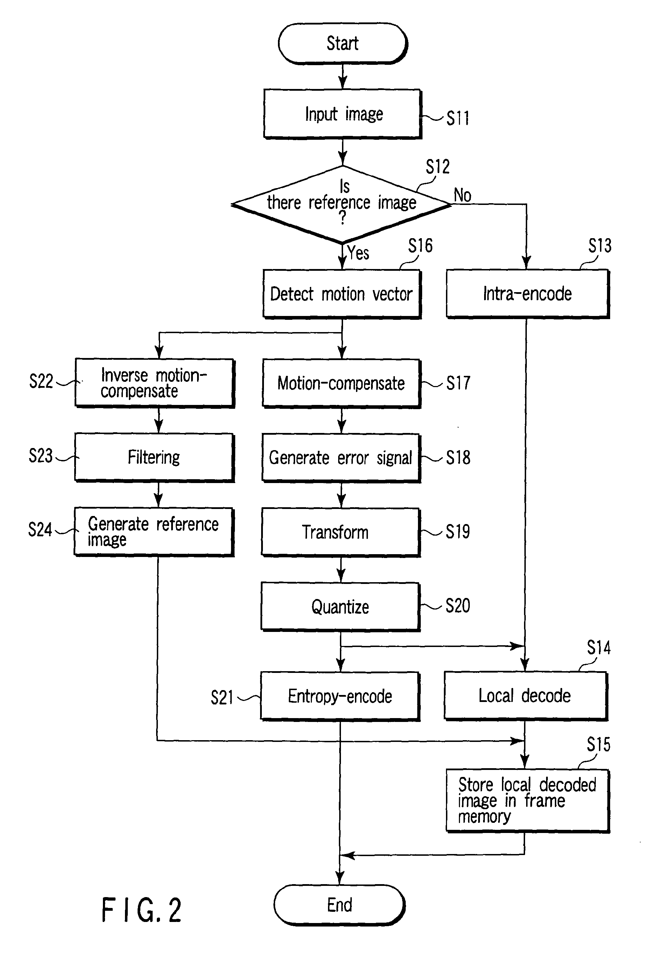

There will now be described an operation of the image encoding apparatus in conjunction with a flow chart of FIG. 2. The prediction structure shown in FIG. 3 is assumed to be encoded as input images or an input sequence. Because the reference frame must be encoded ahead of a frame to be referred, the order of encoding the prediction structure shown in FIG. 3 is in the order shown in the lower portion of FIG. 4.

At first, when the first frame I0 is input as an input image (step S11), it is determined whether a reference frame exists in the frame memory 5 (step S12). Because no reference frame for prediction exists in frame memory 5, the frame I0 is intra-encoded through the transformer 8, the quantizer 10 and the entropy encoder 12 (step S13), and a bit stream corresponding to the frame I0 is output from the encoder 12. Also, the output result of the quantizer 10 is local-decoded through the dequantizer 11 and the inverse transformer 9, whereby a local-decoded image I0' is generated (step S14). The local-decoded image I0 is stored in the frame memory 5 (step S15). The transformation in the transformer 8 and the inverse transformer 9 generally use orthogonal transformation represented by DCT or approximately orthogonal transformation. The quantizer 10 quantizes transform coefficients F at a given quantization step Qstep, and similarly the dequantizer 11 dequantizes the quantized coefficients at a given quantization step Qstep. Most simply, the quantization and dequantization are performed by calculation using the following equation

$$Q_F = Round(F / Q_{step}) \qquad (1)$$

where QF indicates a quantized transform coefficients, and Round (x) represents an operator doing some rounding off. Assuming that the pixel value on the coordinate on the frame I0 (x, y) is p0(x,y) and an encoding distortion added by quantization is N(σI2) (where, σI2 indicates variance of quantization distortion), the pixel value p'0(x,y) on the coordinate (x, y) saved in the frame memory 5 as the local decoded image is modelized by the following equation (2):

$$p'_0(x, y) = p_0(x, y) + N(\sigma_I^2) \qquad (2)$$

Subsequently, when the frame P3 is input, the inter-encoding (interframe-encoding) is done. In other words, the motion vector MV = (xmv,ymv) is detected by block matching (step S16) with the motion detector 2. The pixel p'0 (x+xmv,y+ymv) on the frame 10' of the frame memory 5 is acquired with the motion compensator 1 (step S17). The pixel p'0(x+xmv,y+ymv) corresponding to pixel p3(x,y) on the coordinate on the frame P3 and locating on the frame 10' of the frame memory 5 is calculated with the motion compensator 1 using the motion vector (x, y). The subtracter 6 calculates a difference p3(x,y) - p'0(x+xmv,y+ymv) between the pixel on the frame P3 and the pixel on the frame I0' corresponding thereto (step S18). This difference is output as a bit stream through the transformer 8, the quantizer 10 and the entropy encoder 12 like the frame 10 (step S19, S20, S21). In this time, the quantized transformed difference is dequantized by being added to a predictive image with the adder 7 through the dequantizer 11 and the inverse transformer 9 (step S14). The local decoded image P3' is stored in the frame memory 5. The pixel p'3(x,y) on the coordinate (x, y) on the frame (local decoded image) P3' is modelized by the following equation (3):

$$p'_3(x, y) = p_3(x, y) + N(\sigma_P^2) \qquad (3)$$

where σp2 represents variance of quantization distortion.

The inverse motion compensator 3 motion-compensate the frame P3' in an inverse direction as shown in a dotted arrow of FIG. 5, using a motion vector detected with the motion detector 2 to produce inverse predictive image (step S22). In other words, the pixel p'3 (x, y) on the coordinate (x, y) on the frame P3' is moved to a pixel position of the coordinate. Because the pixel on the frame I0' corresponding to the pixel p'3(x,y) is the pixel p'0(x-xmv,y-ymv). These two pixels are filtered with the weighted average filter 4. As a result, a pixel p"0(x-xmv,y-ymv) corresponding to a new pixel p'0(x-xmv,y-ymv) is generated. The filtered pixel p"0(x-xmv,y-ymv) is defined using a weighting factor w as shown by the following equation (4).

$$p_0''(x - x_{mv}, y - y_{mv}) = (1 - w) \cdot p_0'(x - x_{mv}, y - y_{mv}) + w \cdot p_3'(x, y) \tag{4}$$

where w is a weighting factor and defined, using a weighting factor wmv related to the motion vector MV, a weighting factor wq related to quantization step sizes Qi and Qp used for encoding the frames I0 and P3, respectively and a weighting factor we associated with a predictive error d due to a motion vector, by the following equation (5).

$$w = \min\left(w_{mv}(MV), w_q(Q_i, Q_p)w_e(d)\right) \tag{5}$$

There will be explained a concept of a method of reducing the quantization distortion added to the pixel p"0(x-xmv,y-ymv) represented by the equation (4) before explaining each weighting factor. For brevity, it is assumed that the quantization distortion N ($\sigma$I2) added to p0(x-xmv,y-ymv) and the quantization distortion N ($\sigma$P2) added to p3(x,y) are independent from each other, and dispersions of both quantization distortions are equal. Further, the pixel values p0(x-xmv,y-ymv) and p3(x,y) of the frames I0 and P3 before adding the quantization distortion i.e., encoding are assumed to be equal. In the case that the weighting factor w = 1/2, the variance $\sigma$'I2 of quantization distortion of the frame I0'' with respect to the frame I0 is expressed according to a property of variance by the following equation (6).

$$\sigma_I'^2 = 1/4\,\sigma_I^2 + 1/4\,\sigma_P^2$$
$$= 1/2\,\sigma_I^2 \tag{6}$$

In other words, variance of innate quantization distortion is reduced to half. As thus described, in order for the variance of quantization distortion to be reduced, it is necessary to provide parameters such as a difference between distortions of the innate quantization distortions of the frames I0' and P0', independency of the quantization distortions of both pixels p'0(x-xmv,y-ymv) and p'3(x,y) and a difference between both pixels before addition of quantization distortion. Conversely, the weighting factor w has only to be controlled based on these parameters. There will be explained a method of setting each weighting factor shown in the equation (5).

wmv(MV) is a weighting factor concerning independence between two frames. If the motion vector is 0, namely there is no movement and the pixels at the same position of both frames completely equal, the quantization error of the pixel p'3(x,y) corresponds to re-quantization of the quantization error of the pixel p'0(x,y). In other words, both quantization errors are not independent. When the motion vector has some size, some independence is provided because transformation phase in the transformer 8 is different between the pixels. Accordingly, wmv(MV) has only to be defined by the following equation (7).

$$w_{mv}(MV) = \begin{cases} 0 & if\,(|MV| < T_{MV}) \\ 0.5 & otherwise \end{cases} \tag{7}$$

where TMV indicates a given threshold value. When the reference frame is encoded by intra-encoding (intra-frame encoding) without motion compensation, wmv(MV) always is assumed to be 0.5.

wq(Qi,Qp) is a weighting factor related to dispersions of quantization distortions of the pixels p0(x-xmv,y-ymv) and p3(x,y). It is thought that the distortions $\sigma$I2 and $\sigma$p2 of quantization distortions mentioned above are proportional to squares of quantization step sizes Qi and Qp when the frames I0 and P3 are encoded respectively. In other words, the following equation (8) is established.

$$\sigma_P^2 = \frac{Q_p^2}{Q_i^2} \sigma_I^2 \qquad\qquad (8)$$

Accordingly, the variance σI'2 of an error filtered by a filter using the weighting factor wq is defined by the following equation (9).

$$\sigma_I'^{2'} = (1-w)_q^2 \sigma_I^2 + \frac{w^2 Q_p^2}{Q_i^2} \sigma_I^2 \qquad\qquad (9)$$

Therefore, the weighting factor wq making the variance σI'2 minimum is calculated by the following equation (10).

$$w_q(Q_i, Q_p) = \frac{Q_p^2}{Q_i^2 + Q_p^2} \qquad\qquad (10)$$

where we(d) is a weighting factor on reliability of the motion vector. If the motion vector completely points corresponding pixels between two frames, this weighting factor is 1. This situation is desirable. In contrast, if the motion vector points completely different pixels, the weighting factor is 0. This situation is desirable, too. On the other hand, since the pixels p'3(x,y) and p'0(x-xmv,y-ymv) to be referred to are superposed with quantization errors, if the weighting factor is determined by a difference between the pixels, wrong weighting may be done. Usually, because the motion vector is defined with respect to the region fÓ having a constant area including a coordinate (x,y), the weighting factor is controlled by the equation (12) based on an average prediction error d in the region, namely the following equation (11).

$$d = \frac{1}{|\phi|} \left( \sum_{x_k, y_k \in \phi} (p_0(x_k - x_{mv}, y_k - y_{mv}) - p_3(x_k, y_k))^2 \right) \qquad (11)$$

$$w_e(d) = \left( 1 + \exp\left( \frac{d-t}{s} \right) \right)^{-1} \times \left( 1 + \exp\left( \frac{t}{s} \right) \right) \qquad (12)$$

where t and s are assumed to be given constants. The filtering process is subjected to the pixels with the weighted average filter 4 based on three kinds of weighting factors, so that the variance of error of the local decoded image 10' with respect to the frame I0 is minimized. As a result, the frame of minimum error is generated as a reference image (step S24). This reference image is overwritten on the frame I0' in the frame memory 5. In the video encoding system that is conventionally employed, the motion vector has a precision of less than or equal to one pixel. If the pixels on the frames 10' and P3' cannot correspond at 1:1, the pixels of the frame 10' have only to be made by interpolation from a plurality of corresponding pixels of the frame P3' with the inverse motion compensator 3. This can be realized by applying a method performed conventionally and broadly with the motion compensator 1.

Subsequently, the frame B1 is input, but the process of this time is similar to the process for the frame P3 except for the next point.

(1) Because the variance of error of the local decoded image 10' is a multiple of the following equation (13) ideally, the equation (10) is applied in consideration with the above. In other words, the value obtained by multiplying the equation (13) by Qi2 is used instead of Qi2 in the equation (10).

$$\left(\frac{Q_p^2}{Q_i^2+Q_p^2}\right)^2 + \left(\frac{Q_i^2}{Q_i^2+Q_p^2}\right)^2 \frac{Q_p^2}{Q_i^2} \qquad (13)$$

(2) About the frame P3' which is the local decoded image of the frame P3, too, variance of quantization distortion is minimized by a method similar to the above-mentioned method.

As described above, the filter 4 is configured to be capable of changing a filter strength according to a difference between the predictive image and the local decoded image, or controlling a filter strength based on a square sum of differential values of a whole of a motion compensation object block including pixels subjected to the filtering process. Further, the filter changes a filter strength according to a ratio of a quantization step size of the predictive image to a quantization step size of the decoded image. The filter 4 does not perform the filtering process in a time direction if a motion vector used in the motion compensator is a size not more than a given threshold and it is encoded in same mode.

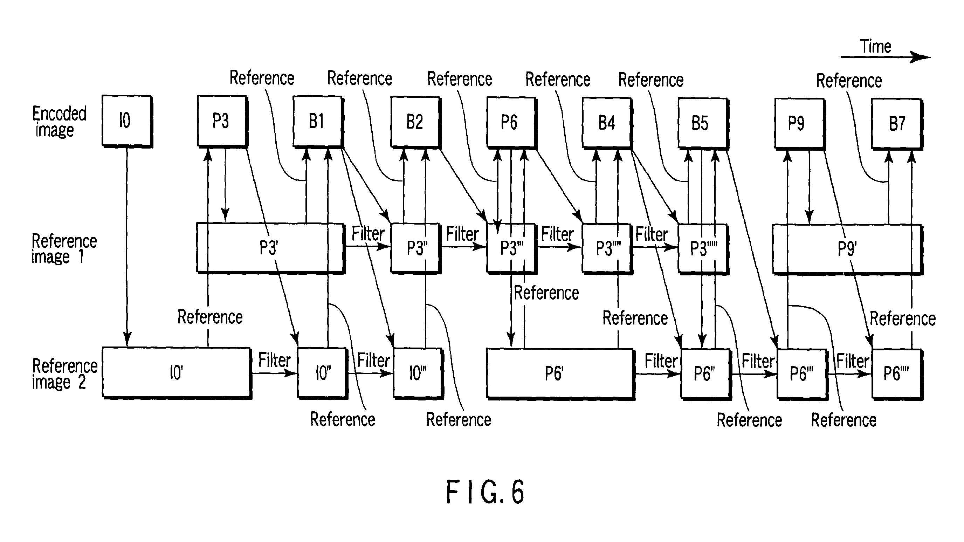

The quantization distortion of reference image is reduced by repeating the above process every encoding of the frame, and the strain component mixed in the prediction error, namely the output of the subtracter 6 in encoding is reduced. The timing diagram illustrating this serial operation is shown in FIG. 6. When the frame I0' saved as a reference frame in the frame memory 5 is encoded together with the following frames P3 and B1, the quantization distortion is reduced by the above-mentioned filtering. Similarly, when the frame P3' is encoded together with the following frames B1, B2, P6 and B4, the quantization distortion is reduced gradually. In other words, since a ratio that an extra noise component included in the reference frame is encoded with the entropy encoder 12 decreases, the encoding efficiency is improved in comparison with the general encoder shown in JP-A 7-288719 (KOKAI).

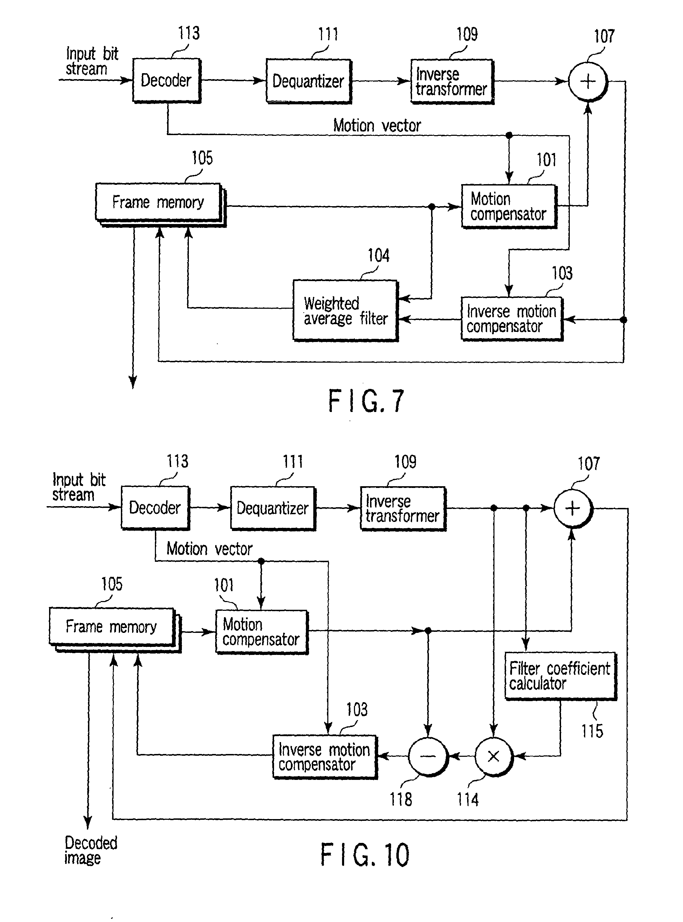

A decoding apparatus corresponding to the encoding apparatus of FIG. 1 is explained referring to FIG. 7. The decoding apparatus of this embodiment comprises a motion compensator 101, an inverse motion compensator 103, a weighted average filter 104, a frame memory 105, an adder 107, an inverse transformer 109, a dequantization 111, and an entropy decoder 113. The construction components other than the entropy decoder 113 perform the same operation as that of the encoding apparatus described above.

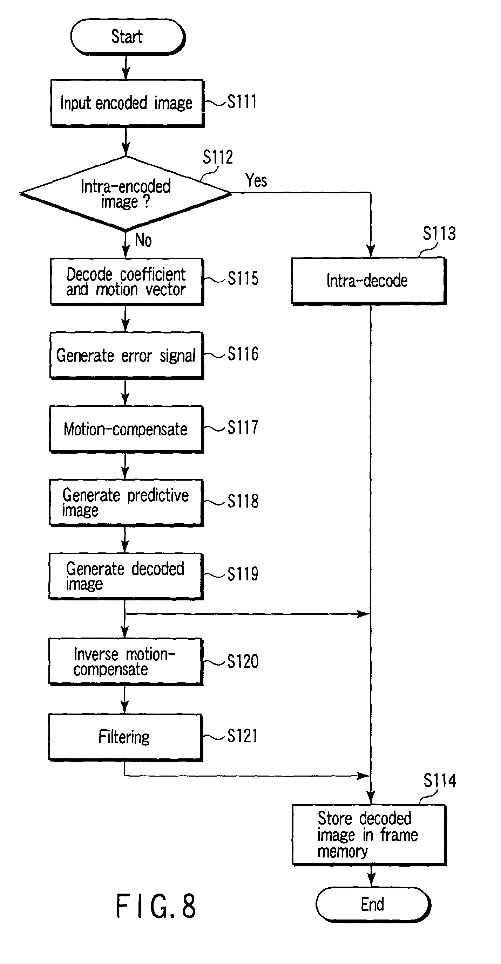

At first, as shown in FIG. 8, a bit stream corresponding to the frame I0 is input to the entropy decoder 113 as an input bit stream (step S111). It is determined whether the bit stream is an intra-encoded image (step S112). If this determination is YES, the entropy decoder 113 intra-decodes the bit stream (step S113). In other words, the entropy decoder 113 sends to the transform coefficients obtained by analyzing and quantizing the bit stream to the dequantizer 111. The transform coefficients is dequantized by the dequantizer 111 and then inverse-transformed by the inverse transformer 109, whereby the frame I0' which is a decoded image of the frame I0 is produced. The frame I0' is saved in the frame memory 105 (step S114). This frame I0' becomes the same frame as the frame I0' of the encoding apparatus mentioned above.

When a bit stream corresponding to the frame P3 is input, the entropy decoder 113 decodes the quantized transform coefficients and a motion vector (step S115). The quantized transform coefficients is dequantized with the dequantizer 111 and inverse-transformed with the inverse transformer 109, whereby a motion compensated residual signal is generated (step S116). A predictive image of the frame P3 is generated from the local decoded image I0' decoded previously with the motion compensator 101 based on a decoding motion vector (step S117, S118). A frame P3' which is a decoded image of the frame P3 is generated by adding the predictive image and the residual signal with the adder 107 and saved in the frame memory 105 (step S119) .

At the same time, the same operation as that of the encoding apparatus, that is, the inverse motion compensation (step S120) and the filtering (step S121) are done with the inverse motion compensator 103 and weighted average filter 104. As a result, a decoded image I0" of the new frame I0 that variance of quantization distortion is minimized is produced and saved in the frame memory 105 (step S114). When such an operation is repeated to a bit stream corresponding to the frame B1, a frame I0" wherein an encoding error is minimized is completed and output as a decoded image. The frames B1' and B2', decoded previously are output following the frame I0" sequentially.

The decoding image from which an encoding noise is more removed in comparison with the general decoding apparatus shown in JP-A 7-288719 (KOKAI) can be generated by repeating the above serial operation, resulting in capable of providing a high-resolution decoded image.

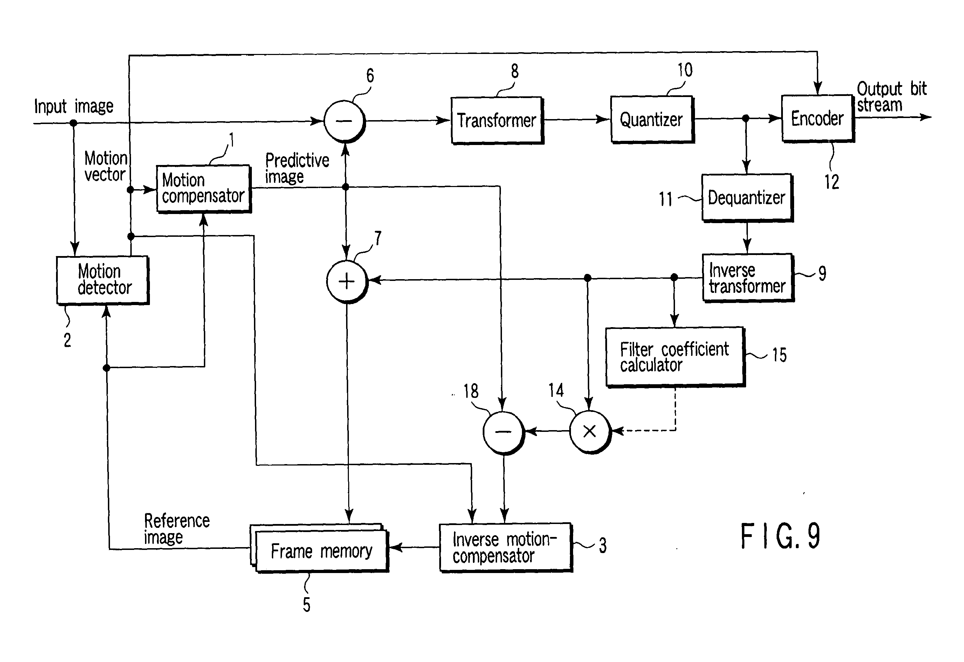

An encoding apparatus of the second embodiment will be described referring to FIG. 9. In the encoding apparatus of this embodiment, the inverse motion compensator and the weighted average filter of the first embodiment are arranged in reverse. In other words, the weighted average filter 4 of the first embodiment is replaced with a filter coefficient calculator 15, a multiplier 14 and a subtracter 18. More specifically, the encoding apparatus of this second embodiment comprises a motion compensator 1, a motion detector 2, an inverse motion compensator 3, a frame memory 5, a subtracter 6, an adder 7, a transformer 8, an inverse transformer 9, a quantizer 10, a dequantizer 11, an entropy encoder 12, a multiplier 14, a filter coefficient calculator 15 and a subtracter 18. Because the motion compensator 1, the motion detector 2, the inverse motion compensator 3, the frame memory 5, the subtracter 6, the adder 7, the transformer 8, the inverse transformer 9, the quantizer 10, the dequantizer 11, and the entropy encoder 12 have the same functions as those of the first embodiment, any further explanation is omitted for brevity's sake.

In the second embodiment, the output of the inverse transformer 9 is connected to the multiplier 14 and the filter coefficient calculator 15 as well as the adder 7. Then output of the filter coefficient calculator 15 is connected to the multiplier 14. The output of the multiplier 14 is connected to the subtracter 18 connected to the motion compensator 1. The output of the subtracter 18 is connected to the inverse motion compensator 3 connected to the motion detector 2.

According to the above encoding apparatus, since the pixel on the frame P3 in the equation (3) is obtained from the frame 10' by motion compensation, it can be modified as the following equation (14).

$$\begin{aligned} p_3'(x, y) &= p_0'(x + x_{mv}, y + y_{mv}) + r_3(x, y) + N(\sigma_P^2) \\ &= p_0'(x + x_{mv}, y + y_{mv}) + r_3'(x, y) \end{aligned} \qquad (14)$$

where r3(x,y) represents a motion compensated residual signal, and r'3(x,y) is obtained by adding quantization distortion thereto, that is, it is an output of the inverse transformer 9. If this is substituted for the equation (4), an equation (15) is established.

$$\begin{aligned} p_0''(x - x_{mv}, y - y_{mv}) &= w \cdot p_0'(x - x_{mv}, y - y_{mv}) + \\ &\quad (1 - w) \cdot \left( p_0'(x + x_{mv}, y + y_{mv}) + r_3'(x, y) \right) \quad (15) \\ &= p_0'(x - x_{mv}, y - y_{mv}) - w \cdot r_3'(x, y) \end{aligned}$$

Accordingly, the weighting factor w defined by the equation (5) may be multiplied by the output of the inverse transformer 9. Therefore, the filter coefficient calculator 15 calculates the weighting factor defined by the equation (5), and the calculated weighting factor is multiplied by r'3(x,y) with the multiplier 14. The result is subtracted from the predictive signal p'0(x-xmv,y-ymv) of the frame I0' with the subtracter 18. Because a process equivalent to a weighted average filter process indicated by the equation (4) is to have been finished by this serial operation, the frame I0" whose quantization distortion is minimized can be provided by getting back the filtered pixel data to the coordinate of frame I0' with the inverse motion compensator 3.

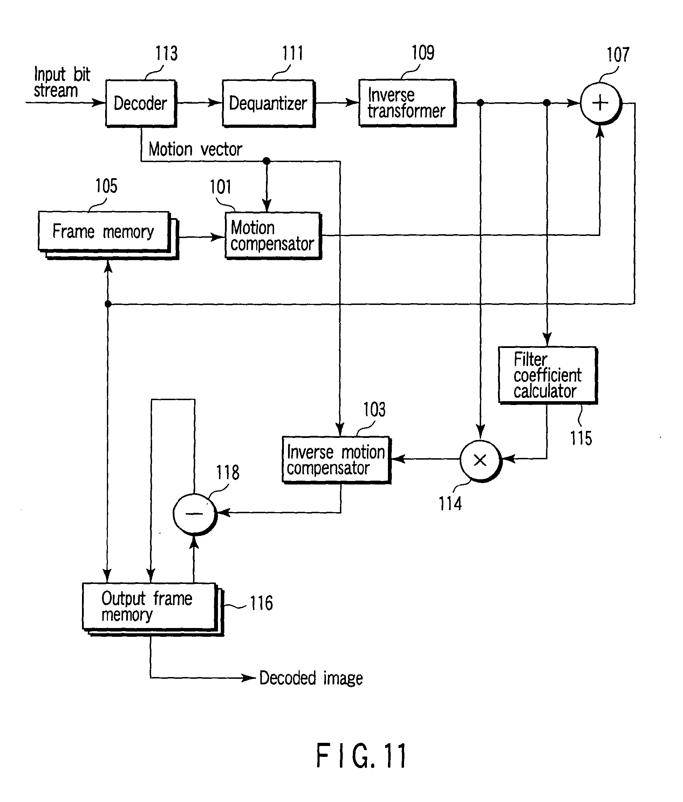

A decoding apparatus corresponding to the encoding apparatus of the second embodiment of FIG. 9 will be described referring to FIG. 10. This decoding apparatus comprises a motion compensator 101, an inverse motion compensator 103, a frame memory 105, an adder 107, an inverse transformer 109, a dequantization 111, an entropy decoder 113, a multiplier 114, a filter coefficient calculator 115 and a subtracter 118. This decoding apparatus performs an operation similar to that of the encoding apparatus of FIG. 7.

At first, a bit stream corresponding to the frame I0 is input to the entropy decoder 113 as an input bit stream. The entropy decoder 113 analyzes the bit stream, and sends the quantized transformation factor to the dequantizer 111. The quantized transformation factor passes through the dequantizer 111 and the inverse transformer 109 to produce the frame I0' which is a decoded image of the frame I0. The frame 10' is saved in the frame memory 105. This frame I0' is completely the same as the frame I0' of the encoding apparatus mentioned above.

When a bit stream corresponding to the frame P3 is input, the entropy decoder 113 decodes a quantized transform coefficients and a motion vector. The quantized transform coefficients passes through the dequantizer 111 and the inverse transformer 109 to produce a motion compensation residual signal. A predictive image of the frame P3 is generated from the local decoded image I0' decoded previously with the motion compensator 101 based on a decoded motion vector. The frame P3 'which is a decoded image of the frame P3 is generated by adding the predictive image and the residual signal with the adder 107 and is saved in the frame memory 105.

At the same time, the same operation as that of the encoding apparatus are done with the inverse motion compensator 103, the multiplier 114 and the subtracter 118 to produce a decoded image I0" of the new frame I0 that variance of quantization distortion is minimized. The decoded image is saved in the frame memory 105 (step S114). When such an operation is repeated until a bit stream corresponding to the frame B1, a frame I0" that an encoding error is minimized is completed and is output as a decoding image. The frames B1' and B2' that are decoded previously are output following the frame I0" sequentially.

A decoding apparatus according to the third embodiment will be described referring to FIG. 11. The present embodiment does not provide a decoding apparatus to be combined with an encoding apparatus, but provide a post-filter of an existing decoding apparatus. The motion compensator 101, frame memory 105, adder 107, inverse transformer 109, dequantizer 111, entropy decoder 113, multiplier 114 and filter coefficient calculator 115 are the same as the decoding apparatus of FIG. 10 in configuration. In the decoding apparatus based on this embodiment, the inverse motion compensator 103 subjects the weighted pixel data from the multiplier 114 to inverse motion compensation, using a motion vector decoded with the entropy decoder 113, and inputs the result to the subtracter 118. The subtracter 118 calculates a difference between the outputs of the inverse motion compensator 103 and the output frame memory 116 and stores a result in the frame memory 116.

According to the above decoding apparatus, at first a bit stream corresponding to the frame I0 is decoded. The bit stream is dequantized with the dequantizer 111 and inverse-transformed with the inverse transformer 109 to produce a decoded image, that is, the frame I0'. The frame I0' is stored in the frame memory 105 and the output frame memory 116.

A bit stream corresponding to the frame P3 is input, and the motion compensated predictive image of the frame I0' is added to the residual signal output from the inverse transformer 109 with the adder 107 to generate a decoded image P3'. The generated image is written in the frame memory 105 and the frame memory 116 like the frame I0'. In this time, a filter coefficient is calculated with the filter coefficient calculator 115 using the residual signal output from the inverse transformer 109 according to the method explained in the second embodiment. The residual signal is multiplied by the filter coefficient with the multiplier 114. The weighted residual signal generated in this way is translated on a coordinate system of the frame I0' through the inverse motion compensator 103, and subtracted from the frame I0' read out from the output frame memory 116 to produce a frame I0" that variance of quantization distortion is minimized. When the filtered image, that is, the frame I0" is overwritten on the frame I0', it is replaced with an image in which a noise is reduced.

When the above process is repeated, a noise due to encoding is minimized whenever the frame stored in the output frame memory 116 is referred to. As a result, a picture quality is improved. Since the number of times that the reference frame is referred to is limited as shown in FIG. 3, it is output to the outside as a decoded image at a point in time when it comes to be not referred to any more. Since the reference frame stored in the frame memory 105 is stored without being processed at all, compatibility can be maintained as a decoder of a general encoding technique.

In an example of a prediction structure in video encoding shown in FIG. 3, for example, the frame "P3" is to be referred to by each of frames "B1", "B2", "B4", "B5" and "P6". In other words, the point corresponding to the pixel on the frame P3 comes to exist on 5 frames at a maximum, and thus filtering of six taps at a maximum is possible. Accordingly, the reference frame is gradually reduced in quantization distortion, resulting in improving picture quality. At the same time, the frame referring to it improves in prediction precision, resulting in that the encoding efficiency improves.

According to the embodiment of the present invention as discussed above, a weighted average filter process is done between the reference frame and the frame referring to it whenever the reference frame is referred to. As a result, quantization distortion due to encoding is minimized. Accordingly, on the encoding side, the encoding efficiency improves in comparison with the conventional art, and on the decoding side, an image of high quality can be provided owing to removal of encoding noise.

**Claims**

1. An encoding apparatus **characterized by** comprising:

   motion compensator means (1) for motion-compensating a reference image to generate a predictive image of an input image;
   subtracter means (6) for calculating a differential signal between the input image and the predictive image;
   encoder means (12) for encoding the differential signal to generate encoded information;
   local decoder means (7, 9. 11) for local-decoding the encoded information to generate a local-decoded differential image;
   filter means (4) for performing a filtering process of a temporal direction between the local-decoded differential image and the predictive image;
   inverse motion compensator means (3) for motion-compensating the image provided by the filtering process in an inverse direction with respect to motion compensation of the motion compensator means to generate an inverse predictive image; and
   updating means (5) for updating the reference image by the inverse predictive image.

2. The apparatus according to claim 1 **characterized in that** the filter means comprises a filter (4) capable of changing a filter strength according to the local-decoded differential image.

3. The apparatus according to claim 1 **characterized in that** the filter means comprises a filter (4) capable of controlling a filter strength based on a square sum of local-decoded differential image of a motion compensated block.

4. The apparatus according to claim 1 **characterized in that** the filter means outputs the predictive image as-is if a motion vector used in the motion compensator means is within a given range and it is encoded in same mode.

5. The apparatus according to claim 1 **characterized in that** the encoder means (12) has a function of quantizing the differential signal at a given quantization step size, and the filter means (4) changes a filter strength according to a ratio of a quantization step size of the predictive image to a quantization step size of the local-decoded differential image.

6. A decoding apparatus **characterized by** comprising:

decoder means (113) for decoding input encoded image information to generate a motion vector and a decoded differential image;
motion compensator means (101) for generating a predictive image of the decoded image from a reference image using the encoded image information;
filter means (104) for performing a filtering process in a temporal direction between the predictive image and the decoded differential image;
inverse motion compensator means (103) for motion-compensating the decoded image in an inverse direction with respect to the motion compensator means using the motion vector to generate an inverse predictive image; and
updating means (105) for updating the reference image by the inverse predictive image.

7. The apparatus according to claim 6 **characterized in that** the filter means comprises a filter (104) capable of changing a filter strength according to the decoded differential image.

8. The apparatus according to claim 6 **characterized in that** the filter means comprises a filter (104) capable of controlling a filter strength based on a square sum of decoded differential image of a motion compensated block.

9. The apparatus according to claim 6 **characterized in that** the filter means outputs the predictive image as-is if a motion vector used in the motion compensator means (101) is within a given range and it is encoded in same mode

10. The apparatus according to claim 6 **characterized in that** the decoder means (113) has a function of dequantizing the image information according to a given quantization step size, and the filter means (104) changes a filter strength according to a ratio of a quantization step size of the predictive image to a quantization step size of the decoded differential image.

11. A decoding apparatus **characterized by** comprising:

decoder means (113) for decoding encoded image information to output a decoded differential image;
motion compensator means (101) to generate a predictive image of a decoded image from a reference image using the encoded image information;
filter means (114, 115) to perform a filtering process in a temporal direction between the predictive image and the decoded image to produce a filtered image;
inverse motion compensator means (103) for subjecting the filtered image to motion compensation in an inverse direction with respect to that of the motion compensator means to generate an inverse predictive image; and
output means (105) for outputting the inverse predictive image as a decoded image,

12. An encoding apparatus **characterized by** comprising:

motion compensator means (1) for performing motion compensation on a reference image to generate a predictive image of an input image;
subtracter means (6) for calculating a differential signal between the input image and the predictive image;
encoder means (12) for encoding the differential signal to generate encoded information;
local decoder means (9, 11) for local-decoding the encoded information to generate a local decoded differential image;
adder means (7) for adding the predictive image and the local decoded differential image to generate a local decoded image;
inverse motion compensator means (3) for subjecting the local decoded image to motion compensation in an inverse direction with respect to that of the motion compensator means to generate inverse predictive image;
filter means (14, 15, 18) for performing a filtering process in a time direction between the local decoded image and the inverse predictive image; and
update means (5) for updating the reference image by an image provided by the filtering process.

13. The apparatus according to claim 12 **characterized in that** the filter means comprises a filter (14, 15, 18) capable of changing a filter strength according to a difference between the predictive image and the local decoded image.

14. The apparatus according to claim 12 **characterized in that** the filter means comprises a filter (14, 15, 18) capable of controlling a filter strength based on a square sum of differential values of a whole of a motion compensation object block including pixels subjected to the filtering process.

15. The apparatus according to claim 12 **characterized in that** the filter means fails to perform the filtering process in a time direction if a motion vector used in the motion compensator means (1) is a size not more than a given threshold and it is encoded in same mode.

16. The apparatus according to claim 12 **characterized in that** the encoder means (12) has a function of quantizing the differential signal at a given quantization step size, and the filter means (14, 15, 18) changes a filter strength according to a ratio of a quantization step size of the predictive image to a quantization step size of the decoded image.

17. A decoding apparatus **characterized by** comprising:

decoder means (113) for decoding input encoded image information to generate a motion vector and a decoded differential image;
motion compensator means (101) for generating a predictive image of a decoded image from a reference image using the encoded image information;
adder means (107) for adding the decoded differential image and the predictive image to generate the decoded image;
inverse motion compensator means (103) for subjecting the decoded image to motion compensation in an inverse direction with respect to that of the motion compensator means using the motion vector to generate inverse predictive image;
filter means (114, 115) for performing a filtering process in a time direction between the decoded image and the inverse predictive image; and
update means (116) for updating the reference image by an image provided by the filtering process.

18. The apparatus according to claim 17 **characterized in that** the filter means comprises a filter (114, 115) capable of changing a filter strength according to a difference between the predictive image and the decoded image.

19. The apparatus according to claim 17 **characterized in that** the filter means comprises a filter (114, 115) capable of controlling a filter strength based on a square sum of differential values of all pixels of a motion compensation object block including pixels subjected to the filtering process.

20. The apparatus according to claim 17 **characterized in that** the filter means fails to perform the filtering process in a time direction if a motion vector used in the motion compensator means (101) is a size not more than a given threshold and it is encoded in the same mode.

21. The decoding apparatus according to claim 17 **characterized in that** the decoder means (113) has a function of dequantizing the image information according to a given quantization step size, and the filter means changes a filter strength according to a ratio of a quantization step size of the predictive image to a quantization step size of the decoded image.

Input image

Motion vector

Motion compensator — 1

Motion detector — 2

Predictive image

Inverse motion compensator — 3

Weighted average filer — 4

Frame memory — 5

Reference image

Local decoded image

6 (−)

7 (+)

Transformer — 8

Inverse transformer — 9

Quantizer — 10

Dequantizer — 11

Encoder — 12

Output bit stream

F I G. 1

FIG.2

Time t

F I G. 3

Time t

Input image | I0 | B1 | B2 | P3 | B4 | B5 | P6 | | ....

Encoded image | | I0 | P3 | B1 | B2 | P6 | B4 | B5 ....

F I G. 4

P3     P3'

F I G. 5

EP 1 841 236 A2

Time →

| | | Reference | Reference | Reference | Reference | Reference | | Reference |

Encoded image: I0  P3  B1  B2  P6  B4  B5  P9  B7

Reference image 1: P3'  Filter  P3''  Filter  P3'''  Filter  P3''''  Filter  P3'''''  P9'

Reference image 2: I0'  Filter  I0''  Filter  I0'''  P6'  Filter  P6''  Filter  P6'''  Filter  P6''''

Reference  Reference  Reference  Reference  Reference  Reference  Reference  Reference

F I G. 6

FIG.7

FIG.10

```
                    ┌─────────┐
                    │  Start  │
                    └────┬────┘
                         │
                         ▼
              ┌──────────────────────┐
              │  Input encoded image │───S111
              └──────────┬───────────┘
                         │
                         ▼
                      S112
                   ╱─────────╲           Yes
                  ╱ Intra-encoded ╲──────────────┐
                  ╲   image ?    ╱                │
                   ╲───────────╱                  │
                         │ No                      │
                         ▼                         ▼      S113
              ┌──────────────────────┐   ┌──────────────────────┐
              │  Decode coefficient  │   │    Intra-decode      │
              │  and motion vector   │───S115 └──────────┬───────────┘
              └──────────┬───────────┘                   │
                         │                               │
                         ▼                               │
              ┌──────────────────────┐                   │
              │  Generate error signal│───S116           │
              └──────────┬───────────┘                   │
                         │                               │
                         ▼                               │
              ┌──────────────────────┐                   │
              │  Motion-compensate   │───S117            │
              └──────────┬───────────┘                   │
                         │                               │
                         ▼                               │
              ┌──────────────────────┐                   │
              │  Generate predictive │───S118            │
              │  image               │                   │
              └──────────┬───────────┘                   │
                         │                               │
                         ▼                               │
              ┌──────────────────────┐                   │
              │  Generate decoded    │───S119            │
              │  image               │                   │
              └──────────┬───────────┘                   │
                         │───────────────────────────────┤
                         ▼                               │
              ┌──────────────────────┐                   │
              │  Inverse motion-     │───S120            │
              │  compensate          │                   │
              └──────────┬───────────┘                   │
                         │                               │
                         ▼                               │
              ┌──────────────────────┐                   │
              │     Filtering        │───S121            │
              └──────────┬───────────┘                   │
                         │───────────────────────────────┤
                                                          ▼      S114
                                              ┌──────────────────────┐
                                              │  Store decoded       │
                                              │  image in frame      │
                                              │  memory              │
                                              └──────────┬───────────┘
                                                         │
                                                         ▼
                                                    ┌─────────┐
                                                    │   End   │
                                                    └─────────┘
```

F I G. 8

FIG. 9

FIG. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7288719 A